# EUROPÄISCHE PATENTSCHRIFT

(11) **EP 3 659 234 B1**
(45) Veröffentlichungstag und Bekanntmachung des Hinweises auf die Patenterteilung: **16.06.2021**
(21) Anmeldenummer: 18743517.7
(22) Anmeldetag: 20.07.2018
(51) Int. Cl.: H02J 7/00, B60L 50/50

(54) **VERFAHREN UND VORRICHTUNG ZUM AUSGLEICHEN VON LADEZUSTÄNDEN EINZELNER BATTERIEN EINES BATTERIESYSTEMS**
METHOD AND DEVICE FOR EQUALISING CHARGING STATES OF INDIVIDUAL BATTERIES OF A BATTERY SYSTEM
PROCÉDÉ ET DISPOSITIF POUR LA COMPENSATION D'ÉTATS DE CHARGE DE BATTERIES INDIVIDUELLES DANS UN SYSTÈME DE BATTERIES

(30) Priorität: 26.07.2017 DE 102017212794
(43) Veröffentlichungstag der Anmeldung: 03.06.2020
(73) Patentinhaber: Robert Bosch GmbH, 70442 Stuttgart (DE)
(72) Erfinder: SALZIGER, Jan, 71679 Asperg (DE); GLEITER, Andreas, 70437 Stuttgart (DE)
(86) Internationale Anmeldenummer: PCT/EP2018/069818
(87) Internationale Veröffentlichungsnummer: WO 2019/020531

(56) Entgegenhaltungen:
- EP-A1- 1 977 493
- WO-A2-2010/128066
- US-A1- 2016 141 894

## Beschreibung

### Stand der Technik

Die Erfindung betrifft ein Verfahren und eine Vorrichtung zum Ausgleichen von Ladezuständen einzelner Batterien eines Batteriesystems und ein elektrisches Fahrzeug mit einer derartigen Vorrichtung.

Das Dokument DE 102012000585 A1 beschreibt eine Batterieanordnung für ein Kraftfahrzeug mit einer Mehrzahl von Batteriemodulen, wobei jedes Batteriemodul mit einer jeweiligen Steuereinheit gekoppelt ist und zwischen jeweils benachbarten Batteriemodulen eine Hochvoltleitung zum elektrisch Koppeln bereitgestellt wird, wobei die Steuereinheiten jeweils dazu ausgebildet sind Daten über die Hochvoltleitung auszutauschen.

Das Dokument DE 102014200111 A1 beschreibt ein Batteriemanagementsystem zum Überwachen und Regeln des Betriebs einer nachladbaren, eine Mehrzahl von Batterien umfassenden Batterie, die eine Steuergeräteeinheit, eine Trenneinheit zur galvanischen Trennung der Batterie von einer Verbrauchereinrichtung, eine Mehrzahl von jeweils wenigstens einer Batteriezelle zuzuordnenden Zellüberwachungseinheiten und ein Kommunikationssystem zum Senden und Empfangen von Daten umfasst.

Das Dokument US 2016/141894 A1 offenbart einen elektrischen Energiespeicher und ein Steuersystem. In einer Ausführungsform umfasst der elektrische Energiespeicher eine Batteriesystemsteuerung und Batteriepacks. Jeder Batteriepack verfügt über Batteriezellen, einen Batteriepack-Controller, der die Zellen überwacht, einen Batteriepack-Zellenausgleich, der die in den Zellen gespeicherte Energiemenge anpasst, und ein Batteriepack-Ladegerät. Der Batteriepack-Controller steuert den Batteriepack-Zellenausgleich und das Batteriepack-Ladegerät, um den Ladezustand der Zellen zu steuern.

Das Dokument WO 2010/128066 A2 offenbart ein Energiespeichersystem mit einem ersten Energiespeicher mit einer ersten Steuereinheit zum Steuern des Betriebs und Überwachen des Zustands des ersten Energiespeichers, wobei ein zweiter Energiespeicher eine zweite Steuereinheit zum Steuern des Betriebs und Überwachen des Zustands des zweiten Energiespeichers aufweist und eine Gesamtsteuereinheit zum Steuern des Betriebs und Überwachen des Zustands aller Energiespeicher einschließlich des ersten Energiespeichers und des zweiten Energiespeichers.

Das Dokument EP 1 977 493 A1 offenbart eine Vorrichtung zum Ausgleichen mehrerer Batteriezellen umfassend ein Batteriemanagementsystem mit einer Ausgleichsschaltung.

Die Aufgabe der Erfindung ist es die Ladezustände einzelner Batterien eines Batteriesystems auszugleichen.

### Offenbarung der Erfindung

Die Erfindung stellt ein Verfahren gemäß Anspruch 1 bereit.

Das erfindungsgemäße Verfahren zum Ausgleichen von Ladezuständen einzelner Batterien eines Batteriesystems umfasst das Erfassen eines Ausschaltsignals eines übergeordneten Steuergeräts mit Hilfe eines Mastersteuergeräts und das Erfassen der Ladezustände der einzelnen Batterien mit Hilfe des Mastersteuergeräts. Die einzelnen Batterien sind an einen Can-Bus angeschlossen und das Mastersteuergerät ist einer der einzelnen Batterien zugeordnet. Des Weiteren umfasst das Verfahren das Bestimmen eines vorgegebenen Ladezustands in Abhängigkeit eines Gesamtladezustands des Batteriesystems und einer Anzahl der an den Can-Bus angeschlossenen einzelnen Batterien mit Hilfe des Mastersteuergeräts. Unter dem Begriff "vorgegebener Ladezustand" wird dabei verstanden, dass die Ladezustände der einzelnen Batterien ausgeglichen bzw. die Ladung gleichmäßig auf die einzelnen Batterien verteilt sind. Außerdem umfasst das Verfahren das Bestimmen jeweils eines Ausgleichsstroms für jede einzelne Batterie in Abhängigkeit des vorgegebenen Ladezustands und des Ladezustands der einzelnen Batterie, sowie das Ausgleichen der Ladezustände der einzelnen Batterien mit Hilfe des Mastersteuergeräts. Unter dem Begriff "Ausgleichen" wird hierbei verstanden, dass jede einzelne Batterie nach Beenden des erfindungsgemäßen Verfahrens denselben Ladezustand aufweist, d. h. die Ladezustände der einzelnen Batterien werden aneinander angeglichen.

Der Vorteil ist hierbei, dass beim erneuten Starten des Systems alle Batterien schneller bzw. gleichzeitig auf den Hochstrombus geschaltet werden können.

In einer Weiterbildung wird das Ausgleichen der Ladezustände der einzelnen Batterien nach Ablauf einer vorgegebenen Zeitdauer beendet.

Vorteilhaft ist hierbei, dass das Batteriesystem zu einem vorgegebenen Zeitpunkt, insbesondere schnell, gestartet werden kann.

Erfindungsgemäß wird ein Gesamtstrom in Abhängigkeit der Ausgleichsströme bestimmt, wobei das Ausgleichen der Ladezustände der einzelnen Batterien durchgeführt wird, wenn der Gesamtstrom einen Wert kleiner als 5A aufweist.

Der Vorteil ist hierbei, dass das Batteriesystem geschont bzw. nicht geschädigt wird.

In einer Weiterbildung werden die Ladezustände der einzelnen Batterien mittels Integration von Strommessungen innerhalb jeder einzelnen Batterie bestimmt. Vorteilhaft ist hierbei, dass die Ladezustände der einzelnen Batterien auf einfache Weise bestimmt werden können.

In einer weiteren Ausgestaltung ist jeder einzelnen Batterie ein Relais zum Verbinden mit einem Hochstrombus zugeordnet, wobei das jeweilige Relais geöffnet wird, wenn die einzelne Batterie den vorgegebenen Ladezustand aufweist.

In einer Weiterbildung wird das Ausgleichen der Ladezustände der einzelnen Batterien mit Hilfe eines batteriesystemexternen Mittels beendet.

Vorteilhaft ist hierbei, dass das Verfahren zum Ausgleichen der Ladeströme aus der Ferne beeinflusst werden kann.

Weiterhin stellt die Erfindung eine Vorrichtung gemäß Anspruch 6 bereit.

Die Vorrichtung zum Ausgleichen von Ladezuständen einzelner Batterien eines Batteriesystems, bei dem die einzelnen Batterien an einen Can-Bus angeschlossen sind, umfasst ein Mastersteuergerät, das einem der einzelnen Batterien des Batteriesystems zugeordnet ist. Erfindungsgemäß ist das Mastersteuergerät dazu eingerichtet, ein Ausschaltsignal eines übergeordneten Steuergeräts zu erfassen, die Ladezustände der einzelnen Batterien zu erfassen, einen vorgegebenen Ladezustand in Abhängigkeit eines Gesamtladezustands des Batteriesystems und einer Anzahl der einzelnen Batterien zu bestimmen, jeweils einen Ausgleichsstrom für jede einzelne Batterie in Abhängigkeit des vorgegebenen Ladezustands und des Ladezustands der einzelnen Batterie zu bestimmen und die Ladezustände der einzelnen Batterien mit Hilfe der jeweiligen Ausgleichsströme auszugleichen. Mit anderen Worten, die einzelnen Batterien werden auf den gleichen Ladezustand eingestellt.

In einer Weiterbildung weist das Batteriesystem einen Speicher auf, in dem eine bestimmte Zeitdauer gespeichert ist.

Vorteilhaft ist hierbei, dass das Ausgleichen der Ladezustände der einzelnen Batterien des Batteriesystems nach Ablauf der bestimmten Zeitdauer abgeschlossen ist.

In einer weiteren Ausgestaltung ist das Mastersteuergerät dazu eingerichtet, ein Signal zum Beenden des Ausgleichens der Ladezustände zu erfassen, wobei das Signal von einem systemexternen Mittel, insbesondere einem mobilen Endgerät, erzeugt wird.

Das erfindungsgemäße elektrische Fahrzeug umfasst eine oben beschriebene Vorrichtung zum Ausgleichen von Ladezuständen einzelner Batterien eines Batteriesystems.

In einer Weiterbildung ist das elektrische Fahrzeug ein Zweirad, insbesondere ein Roller.

Weitere Vorteile ergeben sich aus der nachfolgenden Beschreibung von Ausführungsbeispielen bzw. aus den abhängigen Patentansprüchen.

### Kurze Beschreibung der Zeichnungen

Die vorliegende Erfindung wird nachfolgend anhand bevorzugter Ausführungsformen und beigefügter Zeichnungen erläutert. Es zeigen:
- Figur 1: eine Vorrichtung zum Ausgleichen von Ladezuständen einzelner Batterien eines Batteriesystems und
- Figur 2: ein Verfahren zum Ausgleichen von Ladezuständen einzelner Batterien eines Batteriesystems.

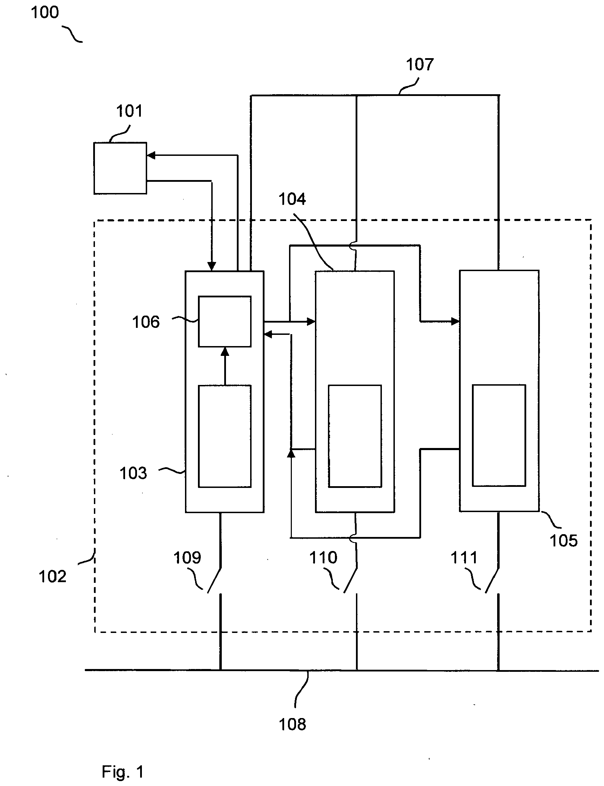

Figur 1 zeigt eine Vorrichtung 100 zum Ausgleichen von Ladezuständen einzelner Batterien 103, 104 und 105 eines Batteriesystems 102. Die einzelnen Batterien 103, 104 und 105 des Batteriesystems 102 sind an einen Can-Bus 107 angeschlossen und parallel zueinander angeordnet. Mit anderen Worten die einzelnen Batterien 103, 104 und 105 sind als Parallelschaltung miteinander verschaltet. Das Batteriesystem 102 umfasst ein Mastersteuergerät 106, das einer der einzelnen Batterien 103, 104 und 105 zugeordnet ist. Es handelt sich hierbei um ein Mastersteuergerät 106, das die Aufgabe eines temporären zentralen Steuergeräts, das die Kommunikation zwischen einem übergeordneten Steuergerät 101, beispielsweise einem Fahrzeugsteuergerät, und den einzelnen Batterien 103, 104 und 105 übernimmt. Prinzipiell kann jede einzelne Batterie 103, 104 und 105 diese Masterfunktion ausführen, da innerhalb jeder einzelnen Batterie 103, 104 und 105 sowohl Masterkomponenten als auch Slavekomponenten vorhanden sind. Es übernimmt beispielsweise diejenige Batterie die Funktion des Mastersteuergeräts 106, die physikalisch oder zeitlich als erste an den Can-Bus angeschlossen wurde. Jeder einzelnen Batterie 103, 104 und 105 ist jeweils ein Relais 109, 110 und 111 zugeordnet, das die einzelne Batterie 103, 104 und 105 mit einem Hochstrombus 108 verbindet. Im Betrieb des Batteriesystems 102 sind die Relais 109, 110 und 111 in der Regel geschlossen, sodass die einzelnen Batterien 103, 104 und 105 auf den Hochstrombus 108 geschaltet sind.

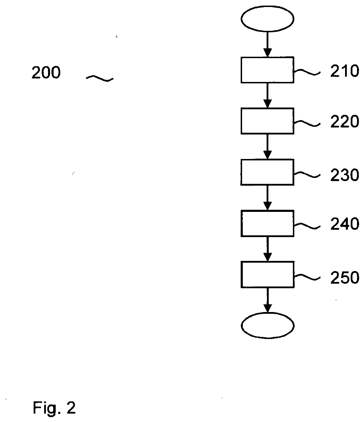

Figur 2 zeigt ein Verfahren 200 zum Ausgleichen von Ladezuständen einzelner Batterien eines Batteriesystems. Das Verfahren 200 startet mit einem Schritt 210, indem ein Ausschaltsignal eines übergeordneten Steuergeräts erfasst wird. Das übergeordnete Steuergerät ist beispielsweise ein Fahrzeugsteuergerät. Das Ausschaltsignal repräsentiert somit beispielsweise das Signal, das erzeugt wird, wenn die Zündung des Fahrzeugs ausgeschaltet wird. In einem folgenden Schritt werden die Ladezustände der einzelnen Batterien des Batteriesystems erfasst. Dazu senden die Slavekomponenten der einzelnen Batterien den jeweiligen Ladezustand an das Mastersteuergerät. Die Ladezustände werden beispielsweise mittels Integration von Strommessungen innerhalb jeder einzelnen Batterie bestimmt. In einem folgenden Schritt 230 wird ein vorgegebener Ladezustand in Abhängigkeit eines Gesamtladezustands und einer Anzahl der an den Can-Bus angeschlossenen einzelnen Batterien bestimmt. Unter dem Begriff "vorgegebener Ladezustand" wird der Ladezustand verstanden, bei dem die Ladezustände der einzelnen Batterien gleich sind, d. h. ausgeglichen sind. In einem folgenden Schritt 240 wird jeweils ein Ausgleichsstrom für jede einzelne Batterie in Abhängigkeit des vorgegebenen Ladezustands und des Ladezustands der einzelnen Batterie bestimmt. In einem folgenden Schritt 250 werden die Ladezustände der einzelnen Batterien mit Hilfe der Ausgleichsströme ausgeglichen.

Jeder einzelnen Batterie ist ein Relais zugeordnet, das die einzelne Batterie an den Hochstrombus anbindet. Wenn die einzelne Batterie den vorgegebenen Ladezustand erreicht hat, wird jeweils das Relais der einzelnen Batterie geöffnet und die einzelne Batterie vom Hochstrombus abgekoppelt.

In einem Ausführungsbeispiel wird das Ausgleichen der Ladezustände der einzelnen Batterien mit Hilfe eines batteriesystemexternen Mittels beendet. Dabei handelt es sich beispielsweise um ein HMI eines Fahrzeugs, ein Smartphone oder eine App, die auf einem Endgerät, insbesondere einem mobilen Endgerät, ausgeführt werden kann.

Erfindungsgemäß wird ein Gesamtstrom in Abhängigkeit der Ausgleichsströme bestimmt. Da die einzelnen Batterien in einer Parallelschaltung zueinander angeordnet sind, ergibt sich der Gesamtstrom aus der Summe der einzelnen Ausgleichsströme. Weist der Gesamtstrom einen Wert kleiner als 5A auf, so wird das Ausgleichen der Ladezustände der einzelnen Batterien durchgeführt.

In einem anderen Ausführungsbeispiel kann eine Zeitdauer vorgegeben werden, nach deren Ablauf der Umladevorgang, d. h. das Ausgleichen der Ladezustände der einzelnen Batterien, abgeschlossen sein soll. Dies kann beispielsweise erforderlich sein, wenn ein Benutzer das Batteriesystem zu einem Zeitpunkt nutzen möchte zu dem der Umladevorgang eigentlich noch nicht abgeschlossen wäre, denn in der Regel wird der Umladevorgang mit einem geringen Gesamtstrom durchgeführt, sodass die Batterien geschont werden. Zu diesem Zweck kann der Benutzer einen Zeitpunkt im Batteriesystem hinterlegen, zu dem er das Batteriesystem wieder verwenden möchte. Dieser Zeitpunkt kann beispielsweise durch den Benutzer mittels HMI oder einer App eingegeben werden. Liegt dieser Zeitpunkt nach Beenden des "konventionellen" Umladevorgangs, so hat dieser Zeitpunkt keinen Einfluss auf den Umladevorgang. Liegt der Zeitpunkt jedoch vor dem Beenden des Umladevorgangs, so wird eine vorgegeben Zeitdauer aus dem Zeitpunkt und der aktuellen Zeit bestimmt. Der für dieses Ausführungsbeispiel benötigte Gesamtladestrom wird gegenüber dem "konventionellen" Gesamtladestrom erhöht, sodass der Umladevorgang rechtzeitig vor dem gewünschten Benutzungszeitpunkt abgeschlossen ist. Der Zeitpunkt kann in einem Speicher des Batteriesystems hinterlegt bzw. gespeichert werden.

## Patentansprüche

1. Verfahren (200) zum Ausgleichen von Ladezuständen einzelner Batterien eines Batteriesystems, wobei die einzelnen Batterien an einen Can-Bus angeschlossen sind, und das Batteriesystem ein Mastersteuergerät aufweist, das einer der einzelnen Batterien zugeordnet ist, mit den Schritten:
• Erfassen (210) eines Ausschaltsignals eines übergeordneten Steuergeräts mit Hilfe des Mastersteuergeräts,
• Erfassen (220) der Ladezustände der einzelnen Batterien mit Hilfe des Mastersteuergeräts,
• Bestimmen (230) eines vorgegebenen, für alle Batterien gleichen Ladezustands in Abhängigkeit eines Gesamtladezustands des Batteriesystems und einer Anzahl der an den Can-Bus angeschlossenen einzelnen Batterien mit Hilfe des Mastersteuergeräts,
• Bestimmen (240) jeweils eines Ausgleichsstroms für jede einzelne Batterie in Abhängigkeit des vorgegebenen Ladezustands und des Ladezustands der einzelnen Batterie,
• Bestimmen eines Gesamtstroms der Ausgleichsströme, und
• Ausgleichen (250) der Ladezustände der einzelnen Batterien mit Hilfe der jeweiligen Ausgleichströme, wenn der Gesamtstrom einen Wert kleiner als 5A aufweist.

2. Verfahren (200) nach Anspruch 1, **dadurch gekennzeichnet, dass** das Ausgleichen der Ladezustände der einzelnen Batterien nach Ablauf einer vorgegebenen Zeitdauer beendet wird.

3. Verfahren (200) nach einem der vorhergehenden Ansprüche, **dadurch gekennzeichnet, dass** die Ladezustände der einzelnen Batterien mittels Integration von Strommessungen innerhalb jeder einzelnen Batterie bestimmt werden.

4. Verfahren (200) nach einem der vorhergehenden Ansprüche, **dadurch gekennzeichnet, dass** jeder einzelnen Batterie ein Relais zum Verbinden mit einem Hochstrombus zugeordnet ist und das jeweilige Relais geöffnet wird, wenn die einzelne Batterie den vorgegebenen Ladezustand aufweist.

5. Verfahren (200) nach einem der vorhergehenden Ansprüche, **dadurch gekennzeichnet, dass** das Ausgleichen der Ladezustände der einzelnen Batterien mit Hilfe eines batteriesystemexternen Mittels beendet wird.

6. Vorrichtung (100) zum Ausgleichen von Ladezuständen einzelner Batterien eines Batteriesystems, wobei die einzelnen Batterien an einen Can-Bus angeschlossen sind, und das Batteriesystem ein Mastersteuergerät aufweist, das einer der einzelnen Batterien zugeordnet ist, **dadurch gekennzeichnet, dass** das Mastersteuergerät eingerichtet ist,
• ein Ausschaltsignal eines übergeordneten Steuergeräts zu erfassen,
• Ladezustände der einzelnen Batterien zu erfassen,
• einen vorgegebenen, für alle Batterien gleichen Ladezustand in Abhängigkeit eines Gesamtladezustands des Batteriesystems und einer Anzahl von an den Can-Bus angeschlossenen einzelnen Batterien zu bestimmen,
• jeweils einen Ausgleichsstrom für jede einzelne Batterie in Abhängigkeit des vorgegebenen Ladezustands und des Ladezustands der einzelnen Batterie zu bestimmen, einen Gesamtstrom der Ausgleichsströme zu bestimmen, und
• die Ladezustände der einzelnen Batterien mit Hilfe der jeweiligen Ausgleichsströme auszugleichen, wenn der Gesamtstrom einen Wert von kleiner als 5A aufweist.

7. Vorrichtung (100) nach Anspruch 6, **dadurch gekennzeichnet, dass** das Batteriesystem einen Speicher aufweist, in dem eine vorgegebene Zeitdauer gespeichert ist.

8. Vorrichtung (100) nach einem der Ansprüche 6 oder 7, **dadurch gekennzeichnet, dass** das Mastersteuergerät dazu eingerichtet ist, ein Signal zum Beenden des Ausgleichens der Ladezustände zu erfassen, wobei das Signal von einem batteriesystemexternen Mittel erzeugt wird, insbesondere von einem mobilen Endgerät.

9. Elektrisches Fahrzeug mit einer Vorrichtung zum Ausgleichen von Ladezuständen einzelner Batterien eines Batteriesystems nach einem der Ansprüche 6 bis 8.

10. Elektrisches Fahrzeug nach Anspruch 9, **dadurch gekennzeichnet, dass** das Fahrzeug ein Zweirad ist, insbesondere ein Roller.

## Claims

1. Method (200) for equalizing states of charge of individual batteries of a battery system, wherein the individual batteries are connected to a CAN bus, and the battery system has a master controller, which is associated with one of the individual batteries, comprising the steps of:
• detecting (210) a switch-off signal of a superordinate controller with the aid of the master controller,
• detecting (220) the states of charge of the individual batteries with the aid of the master controller,
• determining (230) a predetermined state of charge, which is equal for all batteries, depending on an overall state of charge of the battery system and a number of the individual batteries connected to the CAN bus with the aid of the master controller,
• determining (240) a respective equalizing current for each individual battery depending on the predetermined state of charge and the state of charge of the individual battery,
• determining an overall current of the equalizing currents, and
• equalizing (250) the states of charge of the individual batteries with the aid of the respective equalizing currents when the overall current has a value less than 5 A.

2. Method (200) according to Claim 1, **characterized in that** the equalization of the states of charge of the individual batteries is ended after a predetermined period of time has elapsed.

3. Method (200) according to one of the preceding claims, **characterized in that** the states of charge of the individual batteries are determined by means of integration of current measurements within each individual battery.

4. Method (200) according to one of the preceding claims, **characterized in that** a relay for connection to a high-current bus is associated with each individual battery and the respective relay is opened when the individual battery has the predetermined state of charge.

5. Method (200) according to one of the preceding claims, **characterized in that** the equalization of the states of charge of the individual batteries is ended with the aid of a device outside of the battery system.

6. Apparatus (100) for equalizing states of charge of individual batteries of a battery system, wherein the individual batteries are connected to a CAN bus, and the battery system has a master controller, which is associated with one of the individual batteries, **characterized in that** the master controller is configured
• to detect a switch-off signal of a superordinate controller,
• to detect states of charge of the individual batteries,
• to determine a predetermined state of charge, which is equal for all batteries, depending on an overall state of charge of the battery system and a number of individual batteries connected to the CAN bus,
• to determine a respective equalizing current for each individual battery depending on the predetermined state of charge and the state of charge of the individual battery, to determine an overall current of the equalizing currents, and
• to equalize the states of charge of the individual batteries with the aid of the respective equalizing currents when the overall current has a value less than 5 A.

7. Apparatus (100) according to Claim 6, **characterized in that** the battery system has a memory, in which a predetermined period of time is stored.

8. Apparatus (100) according to one of Claims 6 or 7, **characterized in that** the master controller is configured to detect a signal for ending the equalization of the states of charge, wherein the signal is generated by a device outside of the battery system, in particular by a mobile terminal device.

9. Electric vehicle having an apparatus for equalizing states of charge of individual batteries of a battery system according to one of Claims 6 to 8.

10. Electric vehicle according to Claim 9, **characterized in that** the vehicle is a two-wheeled vehicle, in particular a scooter.

## Revendications

1. Procédé (200) pour la compensation d'états de charge de batteries individuelles d'un système de batteries, les batteries individuelles étant connectées à un bus CAN, et le système de batteries présentant un appareil de commande maître qui est associé à l'une des batteries individuelles, comprenant les étapes consistant à :
• détecter (210) à l'aide de l'appareil de commande maître un signal d'arrêt d'un appareil de commande d'ordre supérieur,
• détecter (220) à l'aide de l'appareil de commande maître les états de chargement des batteries individuelles,
• déterminer (230) à l'aide de l'appareil de commande maître un état de charge prédéfini, identique pour toutes les batteries, en fonction d'un état de charge global du système de batteries et d'un nombre de batteries individuelles connectées au bus CAN,
• déterminer (240) respectivement un courant de compensation pour chaque batterie individuelle en fonction de l'état de charge prédéfini et de l'état de charge de la batterie individuelle,
• déterminer un courant global des courants de compensation, et
• compenser (250) les états de charge des batteries individuelles à l'aide des courants de compensation respectifs lorsque le courant global présente une valeur inférieure à 5 A.

2. Procédé (200) selon la revendication 1, **caractérisé en ce que** la compensation des états de charge des batteries individuelles est terminée après écoulement d'un délai prédéfini.

3. Procédé (200) selon l'une quelconque des revendications précédentes, **caractérisé en ce que** les états de charge des batteries individuelles sont déterminés au moyen d'une intégration de mesures de courant à l'intérieur de chaque batterie individuelle.

4. Procédé (200) selon l'une quelconque des revendications précédentes, **caractérisé en ce que** chaque batterie individuelle est associée à un relais pour la liaison avec un bus pour courants forts et le relais respectif est ouvert si la batterie individuelle présente l'état de charge prédéfini.

5. Procédé (200) selon l'une quelconque des revendications précédentes, **caractérisé en ce que** la compensation des états de charge des batteries individuelles est terminée à l'aide d'un moyen externe au système de batteries.

6. Dispositif (100) pour la compensation d'états de charge de batteries individuelles d'un système de batteries, les batteries individuelles étant connectées à un bus CAN, et le système de batteries présentant un appareil de commande maître qui est associé à l'une des batteries individuelles, **caractérisé en ce que** l'appareil de commande maître est aménagé pour
• détecter un signal d'arrêt d'un appareil de commande d'ordre supérieur,
• détecter des états de chargement des batteries individuelles,
• déterminer un état de charge prédéfini, identique pour toutes les batteries, en fonction d'un état de charge global du système de batteries et d'un nombre de batteries individuelles connectées au bus CAN,
• déterminer respectivement un courant de compensation pour chaque batterie individuelle en fonction de l'état de charge prédéfini et de l'état de charge de la batterie individuelle, déterminer un courant global des courants de compensation, et
• compenser les états de charge des batteries individuelles à l'aide des courants de compensation respectifs lorsque le courant global présente une valeur inférieure à 5 A.

7. Dispositif (100) selon la revendication 6, **caractérisé en ce que** le système de batteries présente une mémoire dans laquelle est stocké un délai prédéfini.

8. Dispositif (100) selon l'une quelconque des revendications 6 et 7, **caractérisé en ce que** l'appareil de commande maître est aménagé pour détecter un signal pour terminer la compensation des états de charge, le signal étant généré par un moyen externe au système de batteries, en particulier par un terminal mobile.

9. Véhicule électrique comprenant un dispositif pour la compensation d'états de charge de batteries individuelles d'un système de batteries selon l'une quelconque des revendications 6 à 8.

10. Véhicule électrique selon la revendication 9, **caractérisé en ce que** le véhicule est un deux-roues, en particulier un scooter.
